# EUROPEAN PATENT SPECIFICATION

(11) **EP 4 085 810 B1**
(45) Date of publication and mention of the grant of the patent: **18.11.2026**
(21) Application number: 22179704.6
(22) Date of filing: 04.05.2017
(51) Int. Cl.: A47L 11/24, A47L 11/28, A47L 11/282, A47L 11/40, G05D 1/00

(54) **COMPONENT CLEANING ROBOT AND METHOD OF SURMOUNTING OBSTACLE**
KOMPONENTENREINIGUNGSROBOTER UND VERFAHREN ZUM ÜBERWINDEN EINES HINDERNISSES
ROBOT DE NETTOYAGE DE COMPOSANTS ET PROCÉDÉ DE FRANCHISSEMENT D'OBSTACLE

(30) Priority: 06.06.2016 CN 201610394228
(43) Date of publication of application: 09.11.2022
(62) Document number(s) of the earlier application(s) in accordance with Art. 76 EPC: 17809590.7 / 3 466 314
(73) Proprietor: Beijing Xiaomi Mobile Software Co., Ltd., Beijing 100085 (CN); Beijing Roborock Technology Co., Ltd., Beijing 100192 (CN)
(72) Inventor: HE, Yang, Beijing, 100085 (CN); XIA, Yongfeng, Beijing, 100085 (CN)
(74) Representative: dompatent

(56) References cited:
- WO-A1-2015/090405
- US-A1- 2007 273 864
- US-A1- 2015 185 322
- US-B2- 8 290 623

## Description

### CROSS-REFERENCE TO RELATED APPLICATION

This application is a Divisional Application of European Patent Application No. 17809590.7.

### TECHNICAL FIELD

The present invention relates to the field of automatic cleaning technologies, and more particularly, to a cleaning robot and a method for crossing an obstacle.

### BACKGROUND

With the development of economy and technologies, cleaning robots (such as sweeping robots and mopping robots) are more and more widely used in daily life, and brings much convenience to people's lives.

However, there may be various obstacles in the working environment of the cleaning robot, such as door sills between adjacent rooms, wires and stools on the ground, and the cleaning robot is easily obstructed by these obstacles during the work process, such that cleaning tasks cannot be continued.

WO2015090405A1 relates to a method of controlling operation of a robotic cleaning device and a robotic cleaning device performing the method. The robotic cleaning device comprises a main body and a propulsion system arranged to move the robotic cleaning device. The robotic cleaning device further comprises an obstacle detecting device, a controller arranged to control the propulsion system to move the robotic cleaning device, and an angle-measuring device arranged to measure tilt angles of the robotic cleaning device. In the robotic cleaning device, the controller is arranged to control the angle-measuring device to measure a first tilt angle of the robotic cleaning device before the obstacle is traversed, and to measure a second tilt angle of the robotic cleaning device while the robotic cleaning device traverses the obstacle, the controller further being arranged to compare the second tilt angle with the first tilt angle, and to control the operation of the robotic cleaning device based on a difference between the second tilt angle and the first tilt angle.

US2007273864A1 teaches: an obstacle detection apparatus and method which can detect the state of an obstacle according to a signal generated when the obstacle detection apparatus collides with the obstacle and a change in the posture of the obstacle detection apparatus caused due to the collision with the obstacle. The obstacle detection apparatus includes a main body which can be moved along the surface of the ground, a movement amount determination module which determines whether the amount of movement of the main body is outside a predefined threshold range, a posture determination module which determines the changed posture of the main body with respect to the surface of the ground according to the amount of movement of the main body, and a state determination module which determines the state of an obstacle based on the results of determination of the movement amount determination module or the posture determination module.

### SUMMARY

The invention is defined by the attached set of claims.

In order to solve the problems that the cleaning robot cannot complete cleaning tasks due to obstacles in the traveling process, embodiments of the present invention provide a cleaning robot and a method for crossing an obstacle. Technical solutions are as follows.

According to a first aspect of embodiments of the present invention, there is provided a cleaning robot. The cleaning robot includes a cleaning component, a driver (in the following referred to as drive component), a detector (in the following referred to as detection component), a calculating component and a controller. The drive component includes a first drive wheel and a second drive wheel arranged in parallel, wherein a left wheel of the cleaning robot is determined as the first drive wheel and a right wheel of the cleaning robot is determined as the second drive wheel, or a right wheel of the cleaning robot is determined as the first drive wheel and a left wheel of the cleaning robot is determined as the second drive wheel. The detection component is configured to detect whether the cleaning robot is in an obstacle obstruction state when the drive component drives the cleaning robot to travel. When the cleaning robot is in the obstacle obstruction state, the controller is configured to control the first drive wheel to cross an obstacle and control the second drive wheel to cross the obstacle according to a detection result acquired by the detection component and the calculating component.

In at least one embodiment, when the controller controls the first drive wheel to cross the obstacle and controls the second drive wheel to cross the obstacle according to the detection result acquired by the detection component and the calculating component, the controller is configured to: control the first drive wheel to cross the obstacle, and control the second drive wheel to cross the obstacle when the detection result acquired by the detection component and the calculating component indicates that the cleaning robot is in the obstacle obstruction state and an inclined angle of the cleaning robot is less than a first angle.

In at least one embodiment, when the controller controls the first drive wheel to cross the obstacle, the controller is configured to: control the first drive wheel to travel in a first traveling direction, and control the second drive wheel to travel in a second traveling direction; or control the first drive wheel to travel in the first traveling direction at a first speed, and control the second drive wheel to travel in the first traveling direction at a second speed, the first speed being greater than the second speed; or control the first drive wheel to travel in the first traveling direction, and control the second drive wheel to remain stationary. The first traveling direction is a traveling direction of the cleaning robot before the cleaning robot enters the obstacle obstruction state, and the second traveling direction is opposite to the first traveling direction.

In at least one embodiment, when the controller controls the second drive wheel to remain stationary, the controller is configured to: control a drive direction of the second drive wheel to be the first traveling direction and a rotation speed of the second drive wheel to be zero.

In at least one embodiment, the detection component is configured to detect whether the second drive wheel rotates to the second traveling direction after the controller controls the rotation speed of the second drive wheel to be zero, and the controller is configured to control the second drive wheel to output a rotation force along the first traveling direction to remain stationary when the second drive wheel rotates to the second traveling direction.

In at least one embodiment, when the controller controls the second drive wheel to cross the obstacle, the controller is configured to: control the second drive wheel to travel in a first traveling direction, and control the first drive wheel to travel in a second traveling direction; or control the second drive wheel to travel in the first traveling direction at a first speed, and control the first drive wheel to travel in the first traveling direction at a second speed, the first speed being greater than the second speed; or control the second drive wheel to travel in the first traveling direction, and control the first drive wheel to remain stationary. The first traveling direction is a traveling direction of the cleaning robot before the cleaning robot enters the obstacle obstruction state, and the second traveling direction is opposite to the first traveling direction.

In at least one embodiment, when the controller controls the first drive wheel to remain stationary, the controller is configured to: control a drive direction of the first drive wheel to be the first traveling direction and a rotation speed of the first drive wheel to be zero.

In at least one embodiment, after the controller controls the rotation speed of the first drive wheel to be zero, the detection component is configured to detect whether the first drive wheel rotates to the second traveling direction, and when the first drive wheel rotates to the second traveling direction, the controller is configured to control the first drive wheel to output a rotation force along the first traveling direction to remain stationary.

In at least one embodiment, when the detection result acquired by the detection component and the calculating component indicates that an inclined angle of the cleaning robot is greater than a first angle, the controller is configured to control the cleaning robot to travel in a second traveling direction. The second traveling direction is opposite to a first traveling direction, and the first traveling direction is the traveling direction of the cleaning robot before the cleaning robot enters the obstacle obstruction state.

In at least one embodiment, when the detection result acquired by the detection component and the calculating component indicates that the cleaning robot is in the obstacle obstruction state and an inclined angle of the cleaning robot is less than a second angle, the controller is configured to control the cleaning robot to travel in a second traveling direction. The second traveling direction is opposite to a first traveling direction, the first traveling direction is the traveling direction of the cleaning robot before the cleaning robot enters the obstacle obstruction state, and the second angle is less than the first angle.

In at least one embodiment, the detection component is configured to detect whether the first drive wheel crosses the obstacle. When the detection component detects that the first drive wheel does not cross the obstacle, a number of occurrences of not crossing the obstacle is recorded; and when the number of occurrences is greater than a preset value, the controller is configured to control the cleaning robot to travel in a second traveling direction. A first traveling direction is a traveling direction of the cleaning robot before the cleaning robot enters the obstacle obstruction state.

In at least one embodiment, the detection component is configured to detect whether the first drive wheel crosses the obstacle; and the controller is configured to control the second drive wheel to cross the obstacle when the detection component detects that the first drive wheel crosses the obstacle.

In at least one embodiment, in a situation that the cleaning robot is in the obstacle obstruction state, when the controller controls the first drive wheel to cross the obstacle and controls the second drive wheel to cross the obstacle according to the detection result acquired by the detection component and the calculating component, the controller is configured to: control the first drive wheel to cross the obstacle, and control the second drive wheel to cross the obstacle when the cleaning robot is in the obstacle obstruction state and there is an obstruction obstacle in a direction parallel to a traveling direction of the cleaning robot and perpendicular to a contact surface. The first drive wheel is a drive wheel close to the obstruction obstacle, and the second drive wheel is a drive wheel away from the obstruction obstacle.

In at least one embodiment, when the detection component detects whether the cleaning robot is in the obstacle obstruction state, the detection component is configured to: detect whether the drive wheel is in a slipping state, the slipping state being a state in which the drive wheel rotates on a contact surface in a sliding manner; and determine that the cleaning robot is in the obstacle obstruction state when the drive wheel is in the slipping state.

In at least one embodiment, when the detection component detects whether the cleaning robot is in the obstacle obstruction state, the detection component is configured to: detect whether the drive wheel is in a stuck state, the stuck state being a state in which the drive wheel is stopped by an external force during rotation; and determine that the cleaning robot is in the obstacle obstruction state when the drive wheel is in the stuck state.

In at least one embodiment, when the detection component detects whether the cleaning robot is in the obstacle obstruction state, the detection component is configured to: acquire a traveling mileage of the drive wheel and a position of the cleaning robot; and determine that the cleaning robot is in the obstacle obstruction state when a variation value of the traveling mileage is beyond a preset range and the position of the cleaning robot does not change.

In at least one embodiment, when the detection component detects whether the cleaning robot is in the obstacle obstruction state, the detection component is configured to: detect whether a drive current of the drive component is greater than a preset current value; and determine that the cleaning robot is in the obstacle obstruction state when the drive current is greater than the preset current value.

In at least one embodiment, when the detection component detects whether the cleaning robot is in the obstacle obstruction state, the detection component is configured to: detect whether the cleaning robot is inclined; and determine that the cleaning robot is in the obstacle obstruction state when the cleaning robot is inclined.

According to a second aspect of embodiments of the present invention, there is provided a method for crossing an obstacle. The method is applicable to a cleaning robot including a first drive wheel and a second drive wheel arranged in parallel and a controller. The method includes detecting whether the cleaning robot is in an obstacle obstruction state when the cleaning robot travels, and controlling the first drive wheel to cross an obstacle, and controlling the second drive wheel to cross the obstacle according to a detection result when the cleaning robot is in the obstacle obstruction state.

In at least one embodiment, controlling the first drive wheel to cross the obstacle, and controlling the second drive wheel to cross the obstacle according to the detection result includes: controlling the first drive wheel to cross the obstacle, and controlling the second drive wheel to cross the obstacle when the detection result indicates that the cleaning robot is in the obstacle obstruction state and an inclined angle of the cleaning robot is less than a first angle.

In at least one embodiment, controlling the first drive wheel to cross the obstacle includes: controlling the first drive wheel to travel in a first traveling direction, and controlling the second drive wheel to travel in a second traveling direction; or controlling the first drive wheel to travel in the first traveling direction at a first speed, and controlling the second drive wheel to travel in the first traveling direction at a second speed, the first speed being greater than the second speed; or controlling the first drive wheel to travel in the first traveling direction, and controlling the second drive wheel to remain stationary. The first traveling direction is a traveling direction of the cleaning robot before the cleaning robot enters the obstacle obstruction state, and the second traveling direction is opposite to the first traveling direction.

In at least one embodiment, controlling the second drive wheel to remain stationary includes: controlling a drive direction of the second drive wheel to be the first traveling direction and a rotation speed of the second drive wheel to be zero.

In at least one embodiment, the method further includes: detecting whether the second drive wheel rotates to the second traveling direction after controlling the rotation speed of the second drive wheel to be zero, and controlling the second drive wheel to output a rotation force along the first traveling direction to remain stationary when the second drive wheel rotates to the second traveling direction.

In at least one embodiment, controlling the second drive wheel to cross the obstacle includes: controlling the second drive wheel to travel in a first traveling direction, and controlling the first drive wheel to travel in a second traveling direction; or controlling the second drive wheel to travel in the first traveling direction at a first speed, and controlling the first drive wheel to travel in the first traveling direction at a second speed, the first speed being greater than the second speed; or controlling the second drive wheel to travel in the first traveling direction, and controlling the first drive wheel to remain stationary. The first traveling direction is a traveling direction of the cleaning robot before the cleaning robot enters the obstacle obstruction state, and the second traveling direction is opposite to the first traveling direction.

In at least one embodiment, controlling the first drive wheel to remain stationary includes: controlling a drive direction of the first drive wheel to be the first traveling direction and a rotation speed of the first drive wheel to be zero.

In at least one embodiment, the method further includes: detecting whether the first drive wheel rotates to the second traveling direction after controlling the rotation speed of the first drive wheel to be zero, and controlling the first drive wheel to output a rotation force along the first traveling direction to remain stationary when the first drive wheel rotates to the second traveling direction.

In at least one embodiment, the method further includes: controlling the cleaning robot to travel in a second traveling direction when the detection result indicates that an inclined angle of the cleaning robot is greater than a first angle. The second traveling direction is opposite to a first traveling direction, and the first traveling direction is the traveling direction of the cleaning robot before the cleaning robot enters the obstacle obstruction state.

In at least one embodiment, the method further includes: controlling the cleaning robot to travel in a second traveling direction when the detection result indicates that the cleaning robot is in the obstacle obstruction state and an inclined angle of the cleaning robot is less than a second angle. The second traveling direction is opposite to a first traveling direction, the first traveling direction is the traveling direction of the cleaning robot before the cleaning robot enters the obstacle obstruction state, and the second angle is less than the first angle.

In at least one embodiment, the method further includes: detecting whether the first drive wheel crosses the obstacle; recording a number of occurrences of not crossing the obstacle when the first drive wheel does not cross the obstacle; and controlling the cleaning robot to travel in a second traveling direction when the number of occurrences is greater than a preset value; in which a first traveling direction is a traveling direction of the cleaning robot before the cleaning robot enters the obstacle obstruction state.

In at least one embodiment, the method further includes: detecting whether the first drive wheel crosses the obstacle; and controlling the second drive wheel to cross the obstacle when the first drive wheel crosses the obstacle.

In at least one embodiment, controlling the first drive wheel to cross the obstacle, and controlling the second drive wheel to cross the obstacle according to the detection result when the cleaning robot is in the obstacle obstruction state includes: controlling the first drive wheel to cross the obstacle, and controlling the second drive wheel to cross the obstacle when the cleaning robot is in the obstacle obstruction state and there is an obstruction obstacle in a direction parallel to the traveling direction of the cleaning robot and perpendicular to a contact surface. The first drive wheel is a drive wheel close to the obstruction obstacle, and the second drive wheel is a drive wheel away from the obstruction obstacle.

In at least one embodiment, detecting whether the cleaning robot is in the obstacle obstruction state includes: detecting whether the drive wheel is in a slipping state, the slipping state being a state in which the drive wheel rotates on a contact surface in a sliding manner; and determining that the cleaning robot is in the obstacle obstruction state when the drive wheel is in the slipping state.

In at least one embodiment, detecting whether the cleaning robot is in the obstacle obstruction state includes: detecting whether the drive wheel is in a stuck state, the stuck state being a state in which the drive wheel is stopped by an external force during rotation; and determining that the cleaning robot is in the obstacle obstruction state when the drive wheel is in the stuck state.

In at least one embodiment, detecting whether the cleaning robot is in the obstacle obstruction state includes: acquiring a traveling mileage of the drive wheel and a position of the cleaning robot; and determining that the cleaning robot is in the obstacle obstruction state when a variation value of the traveling mileage is beyond a preset range and the position of the cleaning robot does not change.

In at least one embodiment, detecting whether the cleaning robot is in the obstacle obstruction state includes: detecting whether a drive current of the drive component is greater than a preset current value; and determining that the cleaning robot is in the obstacle obstruction state when the drive current is greater than the preset current value.

In at least one embodiment, detecting whether the cleaning robot is in the obstacle obstruction state includes: detecting whether the cleaning robot is inclined; and determining that the cleaning robot is in the obstacle obstruction state when the cleaning robot is inclined.

The technical solutions provided in embodiments of the present invention may have following advantageous effects.

When the cleaning robot travels, it is detected whether the cleaning robot is in an obstacle obstruction state, when the cleaning robot is in the obstacle obstruction state, in combination with other data of sensors, a decision of whether to control the cleaning robot to cross the obstacle is made. When it is decided to cross the obstacle, the first drive wheel is controlled to cross the obstacle, and the second drive wheel is controlled to cross the obstacle, problems that the cleaning robot cannot continue a cleaning task due to obstruction of obstacles during traveling are avoided, thereby allowing the cleaning robot to independently cross the obstacle, and improving workability of the cleaning robot.

It is to be understood that, both the foregoing general description and the following detailed description are exemplary and explanatory only and are not restrictive of the present invention, as claimed.

### BRIEF DESCRIPTION OF THE DRAWINGS

In order to clearly illustrate technical solutions of embodiments of the present invention, a brief description of drawings used in embodiments is given below. Obviously, the drawings in the following descriptions are only part embodiments of the present invention, and for those skilled in the art, other drawings can be acquired according to these drawings without creative labor.
Fig. 1 is a schematic diagram of a cleaning robot according to an embodiment of the present invention;
Fig. 2 is a schematic diagram of a cleaning robot according to an embodiment of the present invention;
Fig. 3 is a schematic diagram of a cleaning robot according to an embodiment of the present invention;
Fig. 4 is a schematic diagram of a coordinate system according to an embodiment of the present invention;
Fig. 5A is a flow chart of a method for crossing an obstacle according to an exemplary embodiment of the present invention;
Fig. 5B is a schematic diagram of an obstacle obstruction state according to an exemplary embodiment of the present invention;
Fig. 6A is a flow chart of a method for crossing an obstacle according to an exemplary embodiment of the present invention;
Fig. 6B is a schematic diagram of an implementation of detecting an obstacle obstruction state according to another exemplary embodiment of the present invention;
Fig. 6C is a schematic diagram of an implementation of acquireing an inclined angle according to another exemplary embodiment of the present invention;
Fig. 6D is a schematic diagram of an implementation of acquireing an inclined angle according to another exemplary embodiment of the present invention;
Fig. 6E is a schematic diagram of an implementation of acquireing an inclined angle according to another exemplary embodiment of the present invention;
Fig. 6F is a schematic diagram of an implementation of a method for crossing an obstacle according to another exemplary embodiment of the present invention;
Fig. 6G is a schematic diagram of an implementation of a method for crossing an obstacle according to another exemplary embodiment of the present invention; and
Fig. 7 is a flow chart of a method for crossing an obstacle according to another exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

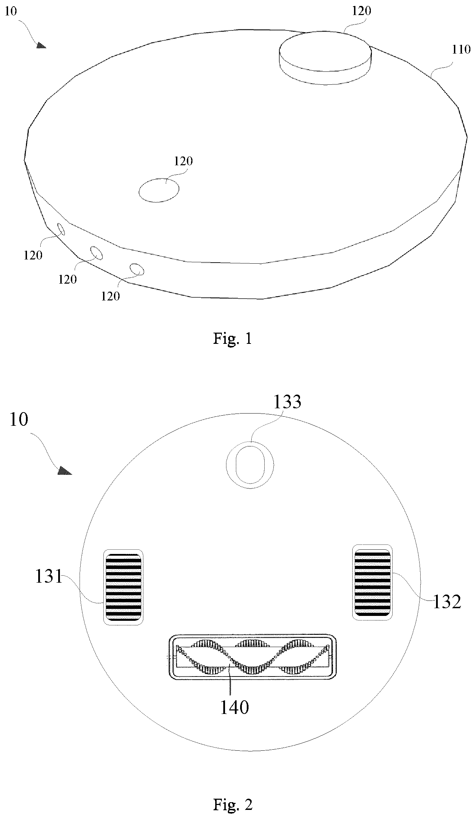

Fig. 1 and Fig. 2 are schematic diagrams of a cleaning robot according to various embodiments of the present invention. Fig. 1 illustrates a top view of a cleaning robot 10 according to an exemplary embodiment. Fig. 2 illustrates a bottom view of a cleaning robot 10. As illustrated in Fig. 1 and Fig. 2, the cleaning robot 10 includes a body 110, a detection component 120, a left wheel 131, a motor (not shown) connected to the left wheel 131, a right wheel 132, a motor (not shown) connected to the right wheel 132, and a main brush 140.

The body 110 forms a housing of the cleaning robot and accommodates other components.

In at least one embodiment, the body 110 has a flat cylindrical shape.

The detection component 120 is configured to measure peripheral environment of the cleaning robot, so as to find environmental objects such as obstacles, walls, steps, etc. The detection component 120 may also be configured to determine a motion state of the cleaning robot. The detection component 120 may include an odometer, a Laser Distance Sensor (LDS), a cliff sensor, a triaxial accelerometer, a gyroscope and a collision sensor. In at least one embodiment, the detection component 120 may also include an infrared sensor, an ultrasonic sensor, a camera, a Hall sensor, and the like.

In the embodiment, the number and position of the detection component 120 are not limited.

A left side of the body 110 of cleaning robot is provided with a left wheel 131, and a right side of the body 110 of cleaning robot is provided with a right wheel 132. The left wheel 131 and the right wheel 132 are arranged in parallel on the left and right sides of the body 110 of cleaning robot. The left wheel 131 and the right wheel 132 are controlled by respective connected motors.

The left side of the body 110 of cleaning robot is also provided with a motor connected to the left wheel 131. A drive circuit of the motor connected to the left wheel 131 is connected to the controller of the cleaning robot. The controller can send a first control signal corresponding to a different duty ratio to the drive circuit of the motor, and the drive circuit of the motor can generate a corresponding drive current according to the first control signal to rotate the motor, so as to control a drive direction and a rotation speed of the left wheel 131. The duty ratio refers to a ratio of an energizing time to an energizing cycle of a pulse signal. The greater the duty ratio is, the greater the rotation speed of the left wheel 131 is, and the smaller the duty cycle is, the smaller the rotation speed of the left wheel 131 is. For example, the drive circuit of the motor connected to the left wheel 131 receives a first control signal corresponding to a duty ratio 1/2 sent by the controller, and generates a corresponding drive current according to the first control signal, under the action of the drive current, the motor connected to the left wheel 131 controls the drive direction of the left wheel 131 to be a forward direction, and the rotation speed of the left wheel 131 to be 50 rpm.

The right side of the body 110 of cleaning robot is also provided with a motor connected to the right wheel 132. A drive circuit of the motor connected to the right wheel 132 is connected to the controller of the cleaning robot. The controller can send a second control signal corresponding to a different duty ratio to the drive circuit of the motor, and the drive circuit of the motor can generate a corresponding drive current according to the second control signal to rotate the motor, so as to control a drive direction and a rotation speed of the right wheel 132. For example, the drive circuit of the motor connected to the right wheel 132 receives a second control signal corresponding to a duty ratio 1/2 sent by the controller, and generates a corresponding drive current according to the second control signal, under the action of the drive current, the motor connected to the right wheel 132 controls the drive direction of the right wheel 132 to be a forward direction, and the rotation speed of the right wheel 132 to be 50 rpm.

The left wheel 131, the motor connected to the left wheel 131, the right wheel 132 and the motor connected to the right wheel 132 of the cleaning robot 10 define a drive component of the cleaning robot 10.

In at least one embodiment, the cleaning robot 10 further includes a guide wheel 133 arranged at the front of the body 110. The guide wheel 133 is configured to change a traveling direction of the cleaning robot during traveling.

The main brush 140 is mounted at the bottom of the body 110. In at least one embodiment, the main brush 140 may be a drum-shaped brush that rotates with respect to a contact surface in a roller type.

It should be noted that, the cleaning robot may also include other modules or components, or only include the above partial modules or components, which is not limited in the embodiment, and only the above cleaning robot is taken as an example for illustration.

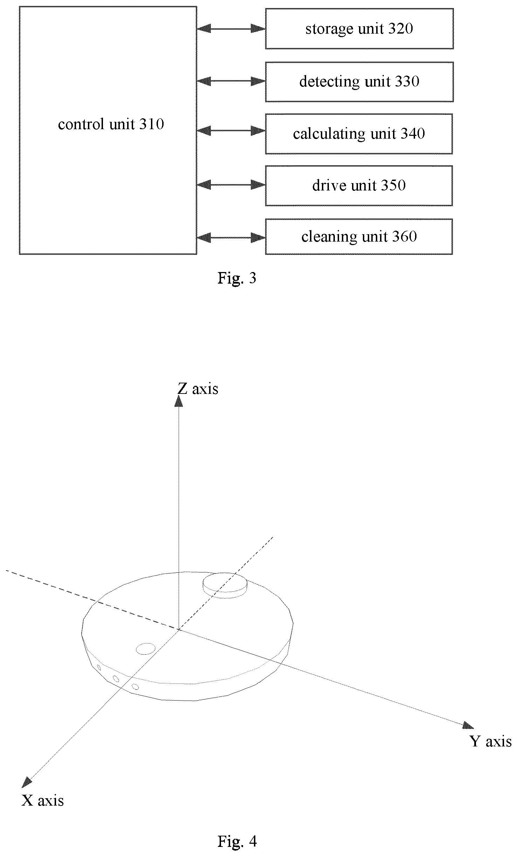

Fig. 3 is a block diagram of a cleaning robot according to an exemplary embodiment. The cleaning robot includes a controller 310, a storage component 320, a detection component 330, a calculating component 340, a drive component 350, and a cleaning component 360.

The controller 310 is configured to control overall operations of the cleaning robot. Upon reception of a cleaning command, the controller 310 can control the cleaning robot to travel in a forward direction or in a backward direction according to a preset logic, and perform cleaning during traveling. Upon reception of a traveling command, the controller 310 can control the cleaning robot to travel on a traveling path in a predetermined traveling mode. The embodiment does not repeat other commands received by the controller 310 from users.

The storage unit 320 is configured to store at least one instruction. The instructions may include an instruction configured to perform a predetermined traveling mode and traveling path, an instruction configured to perform cleaning, an instruction configured to detect whether an obstacle obstruction state is entered, an instruction configured to calculate an inclined angle, an instruction configured to detect whether the inclined angle is greater than a first angle, and the like. The storage component 320 is also configured to store position data of the cleaning robot during traveling, a traveling speed during traveling, a traveling mileage, data related to obstacles, and the like.

The detection component 330 is configured to detect obstacles in a traveling area of the cleaning robot and a traveling state of the cleaning robot. The obstacles may be furniture, household appliances, office equipment, brick walls, wooden walls, wires on the ground, door sills between rooms, etc.

The calculating component 340 is configured to calculate an inclined angle of the cleaning robot when the cleaning robot is in the obstacle obstruction state, and calculate a distance of the cleaning robot to the obstacle in the traveling area. For example, the calculating component 340 can calculate the inclined angle of the cleaning robot through a triaxial accelerometer, or the calculating component 340 can calculate the inclined angle of the cleaning robot through a gyroscope, or the calculating component 340 can acquire the inclined angle of the cleaning robot through a six-axis gyroscope, or the calculating component 340 can calculate the inclined angle of the cleaning robot by a distance of the cleaning robot to the obstacle or by a traveling distance of the cleaning robot.

The drive component 350 is configured to control a drive direction and a rotation speed of the first drive wheel according to a first control signal of the controller 310, or control a drive direction and a rotation speed of the second drive wheel according to a second control signal of the controller 310.

The cleaning component 360 is configured to control the main brush at the bottom of the cleaning robot to clean a contact surface contacting the main brush in a rolling manner during traveling, when a cleaning command received and the controller 310 controls the cleaning robot to travel in a forward direction or in a backward direction according to a preset logic.

In an exemplary embodiment, the controller 310 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, which is configured to perform the method for controlling a cleaning robot provided in embodiments of the present invention.

In at least one embodiment, when the drive component 350 drives the cleaning robot to travel, the detection component 330 is configured to detect whether the cleaning robot is in an obstacle obstruction state.

When the cleaning robot is in the obstacle obstruction state, the controller 310 is configured to control the first drive wheel to cross an obstacle and control the second drive wheel to cross the obstacle according to a detection result acquired by the detection component 330 and the calculating component 340.

In at least one embodiment, when the controller 310 controls the first drive wheel to cross the obstacle and controls the second drive wheel to cross the obstacle according to the detection result acquired by the detection component 330 and the calculating component 340, the controller 310 is configured to control the first drive wheel to cross the obstacle, and control the second drive wheel to cross the obstacle when the detection result acquired by the detection component 330 and the calculating component 340 indicates that the cleaning robot is in the obstacle obstruction state and an inclined angle of the cleaning robot is less than a first angle.

In at least one embodiment, when the controller 310 controls the first drive wheel to cross the obstacle, the controller 310 is configured to control the first drive wheel to travel in a first traveling direction, and control the second drive wheel to travel in a second traveling direction; or control the first drive wheel to travel in the first traveling direction at a first speed, and control the second drive wheel to travel in the first traveling direction at a second speed, the first speed being greater than the second speed; or control the first drive wheel to travel in the first traveling direction, and control the second drive wheel to remain stationary.

The first traveling direction is a traveling direction of the cleaning robot before the cleaning robot enters the obstacle obstruction state, and the second traveling direction is opposite to the first traveling direction.

In at least one embodiment, when the controller 310 controls the second drive wheel to remain stationary, the controller 310 is configured to control a drive direction of the second drive wheel to be the first traveling direction and a rotation speed of the second drive wheel to be zero.

In at least one embodiment, after the controller 310 controls the rotation speed of the second drive wheel to be zero, the detection component 330 detects whether the second drive wheel rotates to the second traveling direction, when the second drive wheel rotates to the second traveling direction, the controller 310 controls the second drive wheel to output a rotation force along the first traveling direction to remain stationary.

In at least one embodiment, when the controller 310 controls the second drive wheel to cross the obstacle, the controller 310 is configured to control the second drive wheel to travel in a first traveling direction, and control the first drive wheel to travel in a second traveling direction; or control the second drive wheel to travel in the first traveling direction at a first speed, and control the first drive wheel to travel in the first traveling direction at a second speed, the first speed being greater than the second speed; or control the second drive wheel to travel in the first traveling direction, and control the first drive wheel to remain stationary.

The first traveling direction is a traveling direction of the cleaning robot before the cleaning robot enters the obstacle obstruction state, and the second traveling direction is opposite to the first traveling direction.

In at least one embodiment, when the controller 310 controls the first drive wheel to remain stationary, the controller 310 is configured to control a drive direction of the first drive wheel to be the first traveling direction and a rotation speed of the first drive wheel to be zero.

In at least one embodiment, after the controller 310 controls the rotation speed of the first drive wheel to be zero, it is detected whether the first drive wheel rotates to the second traveling direction, and when the first drive wheel rotates to the second traveling direction, the controller 310 is configured to control the first drive wheel to output a rotation force along the first traveling direction to remain stationary.

In at least one embodiment, when the detection result acquired by the detection component 330 and the calculating component 340 indicates that an inclined angle of the cleaning robot is greater than a first angle, the controller 310 is configured to control the cleaning robot to travel in a second traveling direction. The second traveling direction is opposite to a first traveling direction, and the first traveling direction is the traveling direction of the cleaning robot before the cleaning robot enters the obstacle obstruction state.

In at least one embodiment, when the detection result acquired by the detection component 330 and the calculating component 340 indicates that the cleaning robot is in the obstacle obstruction state and an inclined angle of the cleaning robot is less than a second angle, the controller 310 is configured to control the cleaning robot to travel in a second traveling direction. The second traveling direction is opposite to a first traveling direction, the first traveling direction is the traveling direction of the cleaning robot before the cleaning robot enters the obstacle obstruction state, and the second angle is less than the first angle.

In at least one embodiment, the detection component 330 detects whether the first drive wheel crosses the obstacle. When the detection component 330 detects that the first drive wheel does not cross the obstacle, a number of occurrences that the first drive wheel does not cross the obstacle is recorded. When the number of occurrences of not crossing the obstacle is greater than a preset value, the controller 310 controls the cleaning robot to travel in a second traveling direction. A first traveling direction is a traveling direction of the cleaning robot before the cleaning robot enters the obstacle obstruction state.

In at least one embodiment, the detection component 330 detects whether the first drive wheel crosses the obstacle. When the detection component 330 detects that the first drive wheel crosses the obstacle, the controller 310 controls the second drive wheel to cross the obstacle.

In at least one embodiment, in a situation that the cleaning robot is in the obstacle obstruction state, when the controller 310 controls the first drive wheel to cross the obstacle and controls the second drive wheel to cross the obstacle according to the detection result acquired by the detection component 330 and the calculating component 340, the controller 310 is configured to control the first drive wheel to cross the obstacle, and control the second drive wheel to cross the obstacle when the cleaning robot is in the obstacle obstruction state and there is an obstruction obstacle in a direction parallel to a traveling direction of the cleaning robot and perpendicular to a contact surface.

The first drive wheel is a drive wheel close to the obstruction obstacle, and the second drive wheel is a drive wheel away from the obstruction obstacle.

In at least one embodiment, when the detection component 330 detects whether the cleaning robot is in the obstacle obstruction state, the detection component 330 is configured to detect whether the drive wheel is in a slipping state. The slipping state being a state in which the drive wheel rotates on a contact surface in a sliding manner. When the drive wheel is in the slipping state, it is determined that the cleaning robot is in the obstacle obstruction state.

In at least one embodiment, when the detection component 330 detects whether the cleaning robot is in the obstacle obstruction state, the detection component 330 is configured to detect whether the drive wheel is in a stuck state. The stuck state being a state in which the drive wheel is stopped by an external force during rotation. When the drive wheel is in the stuck state, it is determined that the cleaning robot is in the obstacle obstruction state.

In at least one embodiment, when the detection component 330 detects whether the cleaning robot is in the obstacle obstruction state, the detection component 330 is configured to acquire a traveling mileage of the drive wheel and a position of the cleaning robot, and determine that the cleaning robot is in the obstacle obstruction state when a variation value of the traveling mileage is beyond a preset range and the position of the cleaning robot does not change.

In at least one embodiment, when the detection component 330 detects whether the cleaning robot is in the obstacle obstruction state, the detection component 330 is configured to detect whether a drive current of the drive component is greater than a preset current value, and determine that the cleaning robot is in the obstacle obstruction state when the drive current is greater than the preset current value.

In at least one embodiment, when the detection component 330 detects whether the cleaning robot is in the obstacle obstruction state, the detection component 330 is configured to detect whether the cleaning robot is inclined, and determine that the cleaning robot is in the obstacle obstruction state when the cleaning robot is inclined.

In an exemplary embodiment, there is also provided a non-transitory computer readable storage medium including instructions, such as the storage component 320 includes instructions. The instructions may be executed by the controller 310 to implement the method for controlling a cleaning robot according to embodiments of the present invention. For example, the non-transitory computer readable storage medium may be a ROM, a random access memory (RAM), a CD-ROM, a magnetic tape, a floppy disk, an optical data storage device, and the like.

In the following embodiments, the left wheel of the cleaning robot is determined as the first drive wheel, and the right wheel of the cleaning robot is determined as the second drive wheel. In other possible embodiments, the right wheel of the cleaning robot may be determined as the first drive wheel, and the left wheel of the cleaning robot may be determined as the second drive wheel, which is not limited in embodiments of the present invention.

To conveniently describe the behavior of the cleaning robot, as illustrated in Fig. 4, a coordinate system based on the cleaning robot is established. The coordinate system includes an X axis, a Y axis, and a Z axis. The origin of the coordinate system is the center point of the cleaning robot. Any two of the three axes of the X axis, the Y axis and the Z axis are perpendicular to each other. The X axis and the Y axis are in a same plane, the X axis is parallel to a front-rear axis of the body of the cleaning robot, and the Y axis of the coordinate system is parallel to a transverse axis of the body of the cleaning robot. The Z axis is perpendicular to the plane defined by the X axis and the Y axis, and the Z axis of the coordinate system is parallel to a vertical axis of the body of the cleaning robot. A drive direction forward along the X axis is the forward direction, and a drive direction backward along the X axis is the backward direction.

Embodiments of the present invention may describe a method for crossing an obstacle based on the above cleaning robot, but embodiments of the present invention do not define the type of the cleaning robot.

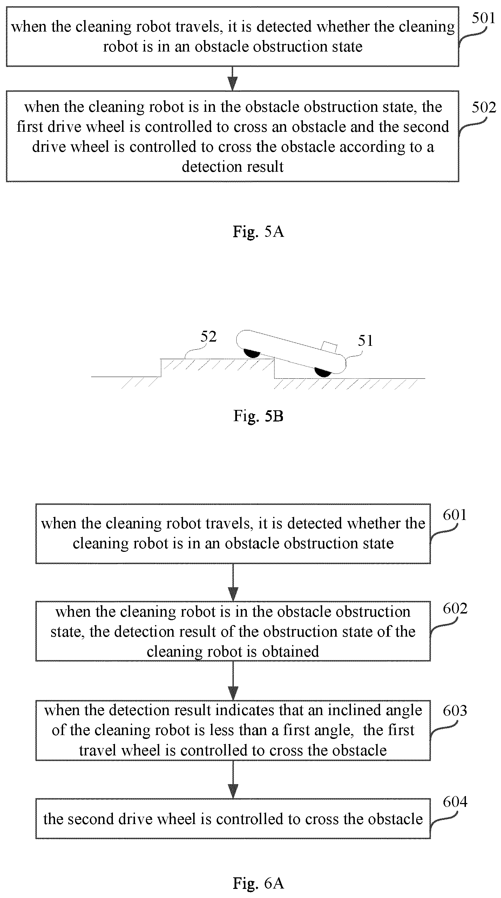

Referring to Fig. 5, which illustrates a flow chart of a method for crossing an obstacle according to an exemplary embodiment. The method for crossing an obstacle may include followings.

At block 501, when the cleaning robot travels, it is detected whether the cleaning robot is in an obstacle obstruction state.

In at least one embodiment, the cleaning robot may travel in a forward direction, or in a backward direction.

In at least one embodiment, the obstacle may be a bar with some hardness and a small height, such as a gate stone between adjacent rooms, or the obstacle may be a soft and deformable thread, such as a wire.

The obstacle obstruction state of the cleaning robot means that two drive wheels of the cleaning robot do not cross the obstacle, and the body of the cleaning robot is inclined. As illustrated in Fig. 5B, which illustrates that the cleaning robot 51 is obstructed by a gate tone 52 when passing through two rooms, the first drive wheel and the second drive wheel do not cross the gate tone 52, and the body of the cleaning robot 51 is inclined.

At block 502, when the cleaning robot is in the obstacle obstruction state, the first drive wheel is controlled to cross an obstacle and the second drive wheel is controlled to cross the obstacle according to a detection result.

In at least one embodiment, when the cleaning robot is in the obstacle obstruction state, the logic of whether to cross the obstacle is performed depending on different detection results of the obstacle obstruction state of the cleaning robot.

As described above, with the method for crossing an obstacle according to embodiments of the present invention, when the cleaning robot travels, it is detected whether the cleaning robot is in an obstacle obstruction state, when the cleaning robot is in the obstacle obstruction state, in combination with other data of sensors, a decision of whether to control the cleaning robot to cross the obstacle is made. When it is decided to cross the obstacle, the first drive wheel is controlled to cross the obstacle, and the second drive wheel is controlled to cross the obstacle, problems that the cleaning robot cannot continue a cleaning task due to obstruction of obstacles during traveling are avoided, thereby allowing the cleaning robot to independently cross the obstacle, and improving workability of the cleaning robot.

Referring to Fig. 6A, which illustrates a flow chart of a method for crossing an obstacle according to another exemplary embodiment. The method for crossing an obstacle may include followings.

At block 601, when the cleaning robot travels, it is detected whether the cleaning robot is in an obstacle obstruction state.

In at least one embodiment, the cleaning robot may travel in a forward direction, or in a backward direction.

When the cleaning robot travels in the forward direction, it means that the cleaning robot travels in a positive direction of the X axis, and when the cleaning robot travels in a direction opposite to the positive direction of the X axis, it means that the cleaning robot travels in the backward direction.

In at least one embodiment, it is determined whether the cleaning robot is in the obstacle obstruction state by detecting whether the first drive wheel and the second drive wheel are in a slipping state. The slipping state is a state in which the drive wheel rotates on a contact surface in a sliding manner. The contact surface is a plane where the cleaning robot performs a cleaning task, such as ground or a desktop. When the drive wheel is in the slipping state, it is determined that the cleaning robot is in the obstacle obstruction state.

In at least one embodiment, it is determined whether the cleaning robot is in the obstacle obstruction state by detecting whether the first drive wheel and the second drive wheel are in a stuck state. The stuck state is a state in which the drive wheel is stopped by an external force during rotation. When the drive wheel is in the stuck state, it is determined that the cleaning robot is in the obstacle obstruction state.

In at least one embodiment, a distance to a front obstacle can be measured through a LDS, and a traveling mileage of the drive wheel can be acquired through an odometer. When a relationship between a variation value of the traveling mileage and a distance to the front obstacle does not conform to a law of change between a variation value of the traveling mileage and a distance to the front obstacle when the cleaning robot travels normally, it is determined that the cleaning robot is in the obstacle obstruction state. This method is a method for detect the slipping state of the drive wheel, and other methods can be also designed according to motion characteristics and electrical characteristics of wheels in slipping behavior.

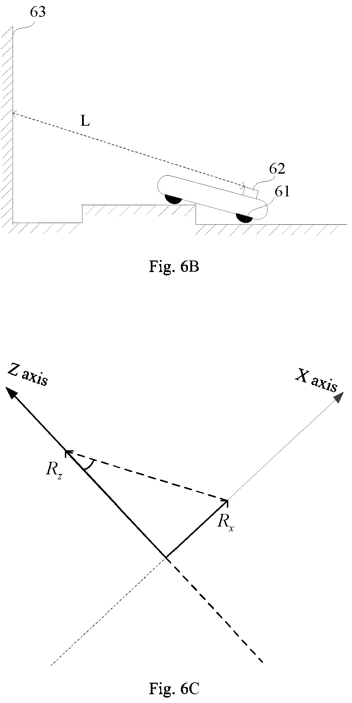

As illustrated in Fig. 6B, the drive wheel 61 of the cleaning robot is rotating, but a distance L to the front obstacle 63 measured by the LDS 62 of the cleaning robot does not change, the relationship between the variation value of the traveling mileage and the distance L does not conform to the law of change during normal traveling, it is determined that the cleaning robot is in the obstacle obstruction state. Normal traveling refers to a working state that the cleaning robot is not obstructed by the obstacle.

In at least one embodiment, it is determined whether the cleaning robot is in the obstacle obstruction state by detecting whether a drive current of the motor connected to the drive wheel is greater than a drive current when the cleaning robot travels normally. When the drive current of the motor connected to the drive wheel is greater than a preset current value, it is determined that the cleaning robot is in the obstacle obstruction state. The preset current value is a value greater than a maximum current value during normal traveling of the cleaning robot. This method is a method for detect the stuck state of the drive wheel, and other methods can be also designed according to motion characteristics and electrical characteristics of wheels in stuck behavior.

In at least one embodiment, it is determined whether the cleaning robot is in the obstacle obstruction state by detecting whether the cleaning robot is inclined. When the cleaning robot is inclined, it is determined that the cleaning robot is in the obstacle obstruction state.

At block 602, when the cleaning robot is in the obstacle obstruction state, the detection result of the obstruction state of the cleaning robot is acquired.

According to the detection component and the calculating component of the cleaning robot, the detection result indicating a state of the body of the cleaning robot when the cleaning robot is in the obstacle obstruction state can be acquired, and the inclined angle of the cleaning robot can be acquired. The detection result can be determined according to the inclined angle, when the detection result indicates that the inclined angle of the cleaning robot is less than the first angle, block 603 is performed.

In at least one embodiment, in general, the first angle is an angle at which the body of the cleaning robot is inclined when the cleaning robot is in the obstacle obstruction state and the obstacle can be crossed.

In at least one embodiment, the first angle is a maximum angle at which the body of the cleaning robot is inclined when the cleaning robot is in the obstacle obstruction state and the obstacle can be crossed. For example, the cleaning robot can cross an obstacle with a height of two centimeters, when the cleaning robot is obstructed the obstacle with the height of two centimeters, the body of the cleaning robot is inclined, and the inclined angle is 5 degree, i.e., the first angle is 5 degree.

There are several following ways to acquire the inclined angle of the cleaning robot.

First, an average acceleration component of the cleaning robot on the X axis is acquired through a triaxial accelerometer, and the inclined angle is determined according to a pre-stored correspondence between the average acceleration component and the inclined angle.

The storage component of the cleaning robot stores a one-to-one correspondence between the average acceleration component on the X axis and the inclined angle. After the calculating component of the cleaning robot acquires the average acceleration component on the X axis, the corresponding inclined angle can be determined.

Second, the inclined angle of cleaning robot is acquired through a six-axis gyroscope.

The six-axis gyroscope is a device having functions of the triaxial accelerometer and the triaxial gyroscope, the calculating component of the cleaning robot acquires a Euler angle of the cleaning robot through the six-axis gyroscope, i.e., the inclined angle of the cleaning robot is acquired.

Third, as illustrated in Fig. 6C, through the triaxial accelerometer, an acceleration component *Rₓ* of the cleaning robot in the X axis direction is acquired, and an acceleration component *R_{z}* in the *Z* axis direction is acquired, the inclined angle *θ* of the cleaning robot can be acquired by a the following Formula (1). $θ = arctan \left(\frac{{R}_{x}}{{R}_{z}}\right)$ (1)

Fourth, through a gyroscope, an instantaneous angular velocity acquired according to a preset interval is acquired during a time period of the cleaning robot from normal traveling to the obstacle obstruction state, and the acquired instantaneous angular velocity and the time period are integrated to calculate the inclined angle*θ*. The preset time interval is a sampling time interval, and the inclined angle*θ* is calculated by the following Formula (2). $θ = {\int }_{{T}_{1}} {w}_{1} dt + … … + {\int }_{{T}_{n}} {w}_{n} dt , {T}_{1} + … … + {T}_{2} = T$ (2) where *wₙ* is an instantaneous angular velocity, and T is the time period from normal traveling to the obstacle obstruction state.

Fifth, through a gyroscope, an instantaneous angular velocity acquired according to a preset time interval is acquired during a time period of the cleaning robot from a first time point to a second time point, the acquired instantaneous angular velocity and the time period are integrated to calculate the inclined angle *θ*₁, and then a offset value of the gyroscope is calculated through an accelerometer, and a more accurate inclined angle *θ*₂ is calculated according to a fusion algorithm of the gyroscope and the accelerometer. The first time point is a time point when the cleaning robot enters the obstacle obstruction state, and the second time point is a latest time point before the cleaning robot enters the obstacle obstruction state.

Sixth, through a LDS, a distance L1 of the cleaning robot to a front obstacle at the first time point when the cleaning robot travels normally is acquired, a distance L2 of the cleaning robot to the front obstacle at the second time point when the cleaning robot is in the obstacle obstruction state is acquired, a theoretical distance L3 to the front obstacle at the second time point is calculated according to a traveling speed of the cleaning robot during normal traveling, and the inclined angle of the cleaning robot is calculated by the following Formula (3). $θ = arccos \left(\frac{{L}_{3}}{{L}_{2}}\right)$ (3)

In at least one embodiment, the front obstacle is not an obstacle that causes the cleaning robot to enter the obstacle obstruction state. For example, the obstacle that causes the cleaning robot to enter the obstacle obstruction state is a wire, and the front obstacle is a wall in front of the wire.

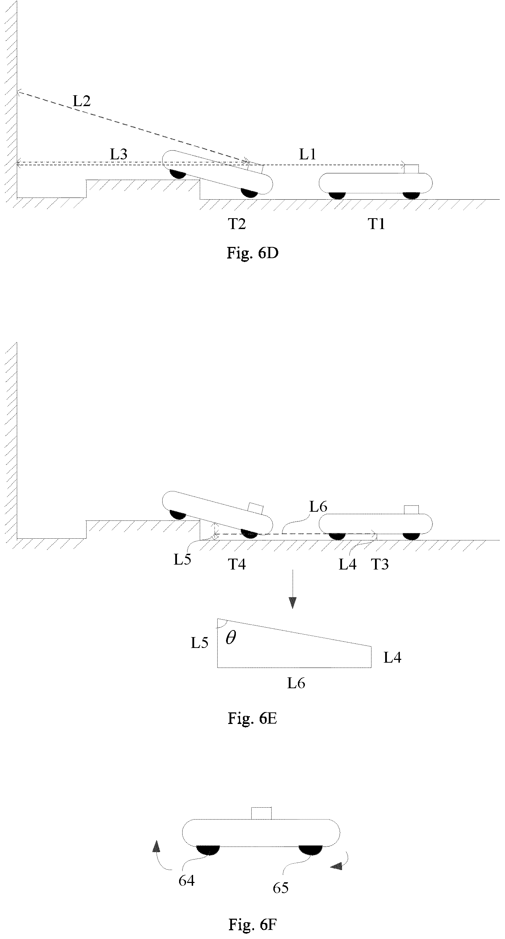

As illustrated in Fig. 6D, the distance to the front obstacle is measured as L1=10 at the time point T1, the distance to the front obstacle is measured as L2=5 at the time point T2, the theoretical distance is calculated as L3=4, according to the relationship between L2 and L3, the inclined angle can be acquired by the formula three.

Seventh, through a cliff sensor, a distance L4 of the cleaning robot to the ground at the first time point when the cleaning robot travels normally is acquired, a distance L5 of the cleaning robot to the ground at the second time point when the cleaning robot is in the obstacle obstruction state is acquired, and a linear distance L6 between the cleaning robot at the first time point and at the second time point is acquired, the inclined angle is acquired by the following Formula (4). $θ = arctan \left(\frac{{L}_{6}}{\left({L}_{5}-{L}_{4}\right)}\right)$ (4)

As illustrated in Fig. 6E, the upper part of Fig. 6E illustrates the distance L4 measured at the time point T3, the distance L5 measured at the time point T4, and the linear distance L6 between the cleaning robot at the time point T3 and at the time point T4. The lower part of Fig. 6E illustrates a triangular relationship between L4, L5, and L6, the inclined angle is acquired according to the Formula four.

It should be noted that, ordinal numbers such as "first", "second" and "third" mentioned in embodiments of the present invention should be understood as merely for distinguishing unless they are meant to express order according to the context.

When the detection result indicates that the inclined angle is greater than the first angle, the cleaning robot is controlled to travel in a second traveling direction. The second traveling direction is opposite to a first traveling direction. The first traveling direction is a traveling direction of the cleaning robot before the obstacle obstruction state is entered.

In at least one embodiment, when the inclined angle is greater than a first angle, the cleaning robot can also be controlled to rotate a certain angle before it is controlled to travel in a traveling direction opposite to the traveling direction before the obstacle obstruction state is entered, that is, when the inclined angle is greater than the first angle, the cleaning robot does not cross the obstacle.

When the detection result indicates that the inclined angle is less than a second angle, the cleaning robot is controlled to travel in a traveling direction opposite to the traveling direction before the obstacle obstruction state is entered. The second angle is less than the first angle.

The second angle is an angle at which the cleaning robot is inclined when the cleaning robot is in the obstacle obstruction state and the obstacle is an immovable obstacle obstructing traveling of the cleaning robot in a vertical direction on the traveling path of the cleaning robot. In general, the second angle is close to zero. For example, in the process of getting out of trouble, the cleaning robot performs a retreat operation, but the cleaning robot is obstructed by a rear obstacle (such as obstructed by a wall), and then the cleaning robot is controlled to travel forward, because the forward direction is opposite to the previous traveling direction, i.e., the backward direction. For another example, when a collision sensor in front of the cleaning robot is continuously triggered, the cleaning robot performs a retreat operation, but the cleaning robot may be obstructed by a rear obstacle during retreat, and then cleaning robot is controlled to travel forward.

It should be noted that, ordinal numbers such as "first", "second" and "third" mentioned in embodiments of the present invention should be understood as merely for distinguishing unless they are meant to express order according to the context.

At block 603, the first travel wheel is controlled to cross the obstacle.

There may be several ways to control the first drive wheel to cross the obstacle.

One, the first drive wheel is controlled to travel in a first traveling direction, and the second drive wheel is controlled to travel in a second traveling direction. The first traveling direction is opposite to the second traveling direction.

The first traveling direction is a traveling direction of the cleaning robot before the cleaning robot enters the obstacle obstruction state.

Assuming that the first traveling direction is a forward direction, and the second traveling direction is a backward direction, as illustrated in Fig. 6F, the first drive wheel 64 travels in the forward direction, and the second drive wheel 65 travels in the backward direction.

In at least one embodiment, the traveling speed of the first drive wheel is greater than a traveling speed during normal traveling. Normal traveling refers to a working state that the cleaning robot is not obstructed by the obstacle.

In at least one embodiment, the speed at which the first drive wheel travels in the first traveling direction is greater than the speed at which the second drive wheel travels in the second traveling direction.

Two, the first drive wheel is controlled to travel in the first traveling direction at a first speed, and the second drive wheel is controlled to travel in the first traveling direction at a second speed. The first speed is greater than the second speed.

The first traveling direction is a traveling direction of the cleaning robot before the cleaning robot enters the obstacle obstruction state.

In order to ensure that the first drive wheel crosses the obstacle first, the first speed of the first drive wheel is greater than the second speed of the second drive wheel. For example, the first traveling direction is a forward direction, the first drive wheel travels in the forward direction at a speed of 40 meters/hour, and the second drive wheel travels in the forward direction at a speed of 20 meters/hour. In at least one embodiment, the first speed is greater than a speed during normal traveling. For example, the speed during normal traveling is 30 meters/hour, and the first speed is 40 meters/hour. Normal traveling refers to a working state that the cleaning robot is not obstructed by the obstacle.

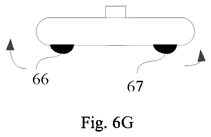

Assuming that the first traveling direction is the forward direction, as illustrated in Fig. 6G, the first drive wheel 66 travels in the forward direction at the first speed, and the second drive wheel 67 travels in the forward direction at the second speed.

Three, the first drive wheel is controlled to travel in the first traveling direction, and the second drive wheel is controlled to remain stationary.

The first traveling direction is a traveling direction of the cleaning robot before the cleaning robot enters the obstacle obstruction state.

In at least one embodiment, controlling the second drive wheel to remain stationary refers to that a drive direction of the second drive wheel is controlled to be the first traveling direction and a rotation speed of the second drive wheel to be zero.

In at least one embodiment, the rotation speed of the drive wheel can be controlled to be zero by controlling the duty ratio to be zero. When the drive direction of the second drive wheel is the first traveling direction and the rotation speed is zero, a reverse rotation resistance of the second drive wheel increases, which can play a certain degree of braking effect, and help the first drive wheel to cross the obstacle.

In at least one embodiment, after the rotation speed of the second drivee wheel is controlled to be zero, since the first drive wheel travels in the first traveling direction, the force caused thereby may drive the second drive wheel to rotate to the second traveling direction. It is detected whether the second drive wheel rotates to the second traveling direction, and when the second drive wheel rotates to the second traveling direction, the second drive wheel is controlled to output a rotation force along the first traveling direction to remain stationary. By controlling the second drive wheel to output the rotation force along the first traveling direction to remain stationary, the second drive wheel can be caused to generate a rotation force to the first traveling direction by giving a small duty ratio current to the motor connected to the second drive wheel, the generated rotation force can counteract the force given to the second drive wheel to rotate to the second traveling direction when the first drive wheel travels in the first traveling direction, such that the second drive wheel remains stationary. The first traveling direction is a traveling direction of the cleaning robot before the cleaning robot enters the obstacle obstruction state, and the first traveling direction is opposite to the second traveling direction.

It should be noted that, ordinal numbers such as "first", "second" and "third" mentioned in embodiments of the present invention should be understood as merely for distinguishing unless they are meant to express order according to the context.

In addition, when it is detected that the cleaning robot is in the obstacle obstruction state, and there is an obstruction obstacle in a direction parallel to the traveling direction of the cleaning robot and perpendicular to a contact surface, the first drive wheel is controlled to cross the obstacle. The first drive wheel is a drive wheel close to the obstruction obstacle.

In at least one embodiment, the obstruction obstacle is not an obstacle that obstructs the cleaning robot to enter the obstacle obstruction state, and obstruction obstacle is the obstacle that the cleaning robot cannot move its position by hitting.

For example, the obstruction obstacle is a wall, that is, the cleaning robot is obstructed by the obstacle when traveling along the wall, in order to prevent the cleaning robot from hitting the wall due to the rotation generated during a single wheel crossing, the drive wheel close to the wall first crosses the obstacle, i.e., the body rotates away from the wall.

At block 604, the second drive wheel is controlled to cross the obstacle.

The second drive wheel is controlled to cross the obstacle. The method for controlling the second drive wheel to cross the obstacle is similar to that of controlling the first drive wheel to cross the obstacle, and there are several implementations.

One, the second drive wheel is controlled to travel in a first traveling direction, and the first drive wheel is controlled to travel in a second traveling direction. The first traveling direction is opposite to the second traveling direction, and the first traveling direction is a traveling direction of the cleaning robot before the cleaning robot enters the obstacle obstruction state.

**In** at least one embodiment, a traveling speed of the second drive wheel is greater than a traveling speed during normal traveling. Normal traveling refers to a working state that the cleaning robot is not obstructed by the obstacle.

**In** at least one embodiment, a speed at which the second drive wheel travels in the first traveling direction is greater than a speed at which the first drive wheel travels in the second traveling direction.

Two, the second drive wheel is controlled to travel in the first traveling direction at a first speed, and the first drive wheel is controlled to travel in the first traveling direction at a second speed. The first speed is greater than the second speed.

In order to ensure that the second drive wheel crosses the obstacle, the first speed of the second drive wheel is greater than the second speed of the first drive wheel.

Three, the second drive wheel is controlled to travel in the first traveling direction, and the first drive wheel is controlled to remain stationary.

The first traveling direction is a traveling direction of the cleaning robot before the cleaning robot enters the obstacle obstruction state.

In at least one embodiment, controlling the first drive wheel to remain stationary refers to that a drive direction of the first drive wheel is controlled to be the first traveling direction and a rotation speed of the first drive wheel to be zero.

In at least one embodiment, the rotation speed of the drive wheel can be controlled to be zero by controlling the duty ratio to be zero. When the drive direction of the first drive wheel is the first traveling direction and the rotation speed is zero, a reverse rotation resistance of the first drive wheel increases, which can play a certain degree of braking effect, and help the second drive wheel to cross the obstacle.

In at least one embodiment, after the rotation speed of the first drivee wheel is controlled to be zero, since the second drive wheel travels in the first traveling direction, the force caused thereby may drive the first drive wheel to rotate to the second traveling direction. It is detected whether the first drive wheel rotates to the second traveling direction, and when the first drive wheel rotates to the second traveling direction, the first drive wheel is controlled to output a rotation force along the first traveling direction to remain stationary. The second traveling direction is opposite to the first traveling direction.

It should be noted that, ordinal numbers such as "first", "second" and "third" mentioned in embodiments of the present invention should be understood as merely for distinguishing unless they are meant to express order according to the context.

In addition, when it is detected that the cleaning robot is in the obstacle obstruction state, and there is an obstruction obstacle in a direction parallel to the traveling direction of the cleaning robot and perpendicular to a contact surface, after the first drive wheel is controlled to cross the obstacle, the second drive wheel is controlled to cross the obstacle. The first drive wheel is a drive wheel close to the obstruction obstacle, and the second drive wheel is a drive wheel away from the obstruction obstacle.

In at least one embodiment, the obstruction obstacle is not an obstacle that obstructs the cleaning robot to enter the obstacle obstruction state, and obstruction obstacle is the obstacle that the cleaning robot cannot move its position by hitting.

For example, the obstruction obstacle is a wall, that is, the cleaning robot is obstructed by the obstacle when traveling along the wall, in order to prevent the cleaning robot from hitting the wall due to the rotation generated during a single wheel crossing, the drive wheel close to the wall is controlled to first cross the obstacle, and then the drive wheel away from the wall is controlled to cross the obstacle.

As described above, with the method for crossing an obstacle according to embodiments of the present invention, when the cleaning robot travels, it is detected whether the cleaning robot is in an obstacle obstruction state, when the cleaning robot is in the obstacle obstruction state, in combination with other data of sensors, a decision of whether to control the cleaning robot to cross the obstacle is made. When it is decided to cross the obstacle, the first drive wheel is controlled to cross the obstacle, and the second drive wheel is controlled to cross the obstacle, problems that the cleaning robot cannot continue a cleaning task due to obstruction of obstacles during traveling are avoided, thereby allowing the cleaning robot to independently cross the obstacle, and improving workability of the cleaning robot.

In addition, with the method for crossing an obstacle according to embodiments of the present invention, the inclined angle of the cleaning robot is detected when the cleaning robot is in the obstacle obstruction state, when the inclined angle of the cleaning robot is less than the first angle, the cleaning robot is controlled to cross the obstacle, and when the inclined angle of the cleaning robot is greater than the first angle, the cleaning robot is controlled to travel in the second traveling direction, thereby avoiding the cleaning robot from continuously crossing the obstacle when the cleaning robot cannot cross the obstacle, which helps the cleaning robot to work flexibly, and improves work efficiency.

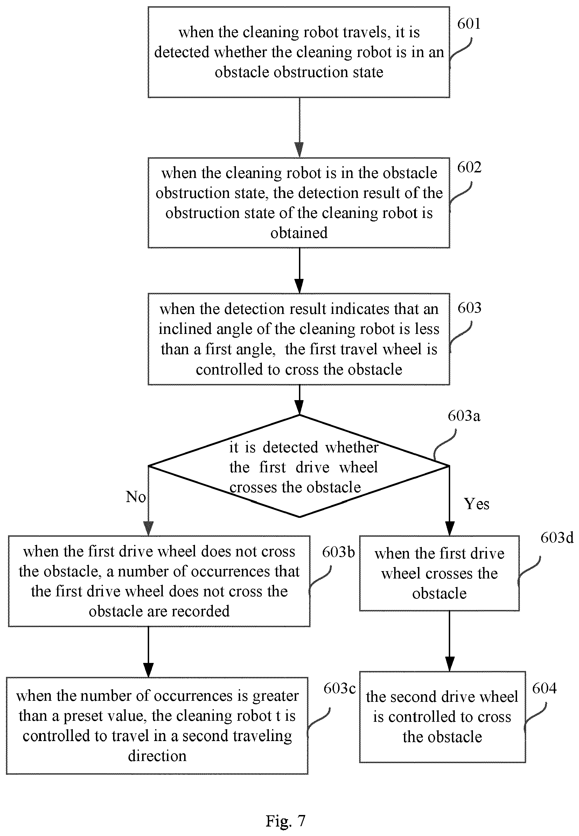

In an alternative embodiment based on the embodiment shown in Fig. 6A, after the first drive wheel is controlled to cross the obstacle, it is determined whether to control the second drive wheel to cross the obstacle by detecting whether the first drive wheel crosses the obstacle. The method for crossing an obstacle may also include block 603a, 603b and 603c, as shown in Fig. 7.

At block 603a, it is detected whether the first drive wheel crosses the obstacle.

In at least one embodiment, assuming that the third time point is a time point when the cleaning robot enters the obstacle obstruction state and has not started to cross the obstacle, and assuming that the fourth time point is a time point after the first drive wheel of the cleaning robot crosses the obstacle.

At the fourth time point, an inclined angle of the cleaning robot is acquired through a triaxial accelerometer, when it is detected that the inclined angle of the cleaning robot at the fourth time point is less than the first angle, it is determined that the first drive wheel crosses the obstacle, otherwise it is determined that the first drive wheel does not cross the obstacle. Alternatively, at the fourth time point, an inclined angle of the cleaning robot is acquired through a gyroscope, when it is detected that the inclined angle of the cleaning robot at the fourth time point is less than the first angle, it is determined that the first drive wheel crosses the obstacle, otherwise it is determined that the first drive wheel does not cross the obstacle. Alternatively, at the third time point and the fourth time point, distances of the cleaning robot to the front obstacle are acquired through a LDS, when it is detected that the distance to the front obstacle corresponding to the fourth time point is less than that of corresponding to the third time point, it is determined that the first drive wheel crosses the obstacle, otherwise it is determined that the first drive wheel does not cross the obstacle. Alternatively, a drive current of the motor connected to the first drive wheel is acquired, when the drive current is the drive current when the cleaning robot travels normally, it is determined that the first drive wheel crosses the obstacle, otherwise it is determined that the first drive wheel does not cross the obstacle. Alternatively, at the third time point and the fourth time point, distances of the cleaning robot to the contact surface are acquired, when it is detected that the distance of the cleaning robot to the contact surface corresponding to the fourth time point is less than that of corresponding to the third time point, it is determined that the first drive wheel crosses the obstacle, otherwise it is determined that the first drive wheel does not cross the obstacle.

At block 603b, when the first drive wheel does not cross the obstacle, a number of occurrences that the first drive wheel does not cross the obstacle are recorded.

At block 603c, when the number of occurrences is greater than a preset value, the cleaning robot t is controlled to travel in a second traveling direction.

The second traveling direction is opposite to the first traveling direction, and the first traveling direction is a traveling direction of the cleaning robot before the cleaning robot enters the obstacle obstruction state.

In at least one embodiment, the preset value may be set by manufacturers before the cleaning robot is shipped from the factory, or the preset value may be set by the user.

At block 603d, when the first drive wheel crosses the obstacle, block 604 is performed.

In addition, after the first drive wheel crosses the obstacle, the second drive wheel crosses the obstacle, it can also detect whether the second drive wheel crosses obstacle. When the second drive wheel does not cross the obstacle, a number of occurrences that the second drive wheel does not across the obstacle is recorded. When the number of occurrences that the second drive wheel does not across is greater than a preset value, the cleaning robot is controlled to travel in the second traveling direction.

With the method for crossing an obstacle according to embodiments of the present invention, it is detected whether the first drive wheel crosses the obstacle, the number of occurrences of not crossing the obstacle is recorded when the obstacle is not crossed, when the number of occurrences is greater than a preset value, it is indicated that the cleaning robot cannot cross the obstacle, and the cleaning robot is controlled to travel in the second traveling direction, thereby avoiding the cleaning robot from continuously crossing the obstacle when the cleaning robot cannot cross the obstacle, which helps the cleaning robot to work flexibly, and improves work efficiency.

Other embodiments of the present invention will be apparent to those skilled in the art from consideration of the specification and practice of the present invention disclosed here.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A cleaning robot (10), comprising:
a cleaning component (360);
a detector (330);
a calculating component (340);
a driver (350) comprising a first drive wheel and a second drive wheel arranged in parallel, wherein a left wheel of the cleaning robot (10) is determined as the first drive wheel and a right wheel of the cleaning robot (10) is determined as the second drive wheel, or a right wheel of the cleaning robot (10) is determined as the first drive wheel and a left wheel of the cleaning robot (10) is determined as the second drive wheel;
wherein, when the driver (350) drives the cleaning robot to travel, the detector (330) is configured to detect whether the cleaning robot (10) is in an obstacle obstruction state; and
a controller (310) configured to control the first drive wheel to cross an obstacle and control the second drive wheel to cross the obstacle according to a detection result acquired by the detector (330) and the calculating component (340) when the detector (330) detects that the cleaning robot (10) is in the obstacle obstruction state,
**characterised in that**
the detector (330) is further configured to detect whether the first drive wheel crosses the obstacle; and
the controller (310) is further configured to control the second drive wheel to cross the obstacle when the detector (330) detects that the first drive wheel crosses the obstacle.

2. The cleaning robot (10) according to claim 1, wherein:
the controller (310) is further configured to control the first drive wheel to cross the obstacle when the detection result indicates that the cleaning robot (10) is in the obstacle obstruction state and an inclined angle of the cleaning robot (10) is less than a first angle.

3. The cleaning robot (10) according to claim 1 or 2, wherein when the controller (310) controls the first drive wheel to cross the obstacle, the controller (310) is further configured to:
control the first drive wheel to travel in a first traveling direction, and control the second drive wheel to travel in a second traveling direction; or
control the first drive wheel to travel in the first traveling direction at a first speed, and control the second drive wheel to travel in the first traveling direction at a second speed, the first speed being greater than the second speed; or
control the first drive wheel to travel in the first traveling direction, and control the second drive wheel to remain stationary;
wherein the first traveling direction is a traveling direction of the cleaning robot (10) before the cleaning robot (10) enters the obstacle obstruction state, and the second traveling direction is opposite to the first traveling direction.

4. The cleaning robot (10) according to claim 3, wherein:
when the controller (310) controls the second drive wheel to remain stationary, the controller (310) is further configured to control a drive direction of the second drive wheel to be the first traveling direction and a rotation speed of the second drive wheel to be zero;
the detector (330) is further configured to detect whether the second drive wheel rotates to the second traveling direction after the controller (310) controls the rotation speed of the second drive wheel to be zero; and
the controller (310) is further configured to control the second drive wheel to output a rotation force along the first traveling direction to remain stationary when the second drive wheel rotates to the second traveling direction.

5. The cleaning robot (10) according to any one of claims 1 to 4, wherein when the controller (310) controls the second drive wheel to cross the obstacle, the controller (310) is configured to:
control the second drive wheel to travel in a first traveling direction, and control the first drive wheel to travel in a second traveling direction; or
control the second drive wheel to travel in the first traveling direction at a first speed, and control the first drive wheel to travel in the first traveling direction at a second speed, the first speed being greater than the second speed; or
control the second drive wheel to travel in the first traveling direction, and control the first drive wheel to remain stationary;
wherein the first traveling direction is a traveling direction of the cleaning robot (10) before the cleaning robot (10) enters the obstacle obstruction state, and the second traveling direction is opposite to the first traveling direction.

6. The cleaning robot (10) according to claim 4, wherein:
when the controller (310) controls the first drive wheel to remain stationary, the controller (310) is configured to control a drive direction of the first drive wheel to be the first traveling direction and a rotation speed of the first drive wheel to be zero,
the detector (330) is configured to detect whether the first drive wheel rotates to the second traveling direction after the controller (310) controls the rotation speed of the first drive wheel to be zero; and
the controller (310) is further configured to control the first drive wheel to output a rotation force along the first traveling direction to remain stationary when the first drive wheel rotates to the second traveling direction.

7. The cleaning robot (10) according to claim 2, wherein:
the controller (310) is further configured to control the cleaning robot (10) to travel in a second traveling direction when the detection result indicates that the inclined angle of the cleaning robot (10) is greater than the first angle; and
the second traveling direction is opposite to a first traveling direction, and the first traveling direction is the traveling direction of the cleaning robot (10) before the cleaning robot (10) enters the obstacle obstruction state.

8. The cleaning robot (10) according to claim 7, wherein:
the controller (310) is further configured to control the cleaning robot (10) to travel in a second traveling direction when the detection result indicates that the cleaning robot (10) is in the obstacle obstruction state and the inclined angle of the cleaning robot (10) is less than a second angle; and
the second traveling direction is opposite to a first traveling direction, the first traveling direction is the traveling direction of the cleaning robot (10) before the cleaning robot (10) enters the obstacle obstruction state, and the second angle is less than the first angle.

9. The cleaning robot (10) according to any one of claims 1 to 8, wherein:
the detector (330) is further configured to record a number of occurrences of not crossing the obstacle when the detector (330) detects that the first drive wheel does not cross the obstacle;
the controller (310) is further configured to control the cleaning robot (10) to travel in a second traveling direction when the number of occurrences is greater than a preset value; and
a first traveling direction is a traveling direction of the cleaning robot (10) before the cleaning robot (10) enters the obstacle obstruction state, and the second traveling direction is opposite to the first traveling direction.

10. The cleaning robot (10) according to any one of claims 1 to 9, wherein, in a situation that the cleaning robot (10) is in the obstacle obstruction state, when the controller (310) controls the first drive wheel to cross the obstacle and controls the second drive wheel to cross the obstacle, the controller (310) is configured to:
control the first drive wheel to cross the obstacle, and control the second drive wheel to cross the obstacle when the cleaning robot (10) is in the obstacle obstruction state and there is an obstruction obstacle in a direction parallel to a traveling direction of the cleaning robot (10) and perpendicular to a contact surface, the contact surface being a plane where the cleaning robot (10) performs a cleaning task;
wherein the first drive wheel is a drive wheel proximal to the obstruction obstacle, and the second drive wheel is a drive wheel distal from the obstruction obstacle.

11. The cleaning robot (10) according to any one of claims 1 to 10, wherein:
the detector (330) is further configured to detect whether at least one of the first drive wheel or the second drive wheel is in a slipping state, the slipping state being a state in which at least one of the first drive wheel or the second drive wheel rotates on a contact surface in a sliding manner; and determine that the cleaning robot (10) is in the obstacle obstruction state when the at least one of the first drive wheel and the second drive wheel is in the slipping state, or
the detector (330) is further configured to detect whether at least one of the first drive wheel and the second drive wheel is in a stuck state, the stuck state being a state in which at least one of the first drive wheel and the second drive wheel is stopped by an external force during rotation; and determine that the cleaning robot (10) is in the obstacle obstruction state when the at least one of the first drive wheel and the second drive wheel is in the stuck state.

12. The cleaning robot (10) according to any one of claims 1 to 10, wherein the detector (330) is further configured to:
acquire a traveling mileage of at least one of the first drive wheel or the second drive wheel, and a position of the cleaning robot (10); and
determine that the cleaning robot (10) is in the obstacle obstruction state when a variation value of the traveling mileage is beyond a preset range and the position of the cleaning robot (10) does not change.

13. The cleaning robot (10) according to any one of claims 1 to 10, wherein the detector (330) is further configured to:
detect whether a drive current of the driver (350) is greater than a preset current value; and
determine that the cleaning robot (10) is in the obstacle obstruction state when the drive current is greater than the preset current value.

14. The cleaning robot (10) according to any one of claims 1 to 10, wherein:
the detector (330) is further configured to detect whether the cleaning robot (10) is inclined; and
the determining circuit is further configured to determine that the cleaning robot (10) is in the obstacle obstruction state when the cleaning robot (10) is inclined.

15. A method for crossing an obstacle, for a cleaning robot (10) comprising a first drive wheel and a second drive wheel arranged in parallel, wherein a left wheel of the cleaning robot (10) is determined as the first drive wheel and a right wheel of the cleaning robot (10) is determined as the second drive wheel, or a right wheel of the cleaning robot (10) is determined as the first drive wheel and a left wheel of the cleaning robot (10) is determined as the second drive wheel, the method being **characterized in** including:
determining whether the cleaning robot (10) is in an obstacle obstruction state;
controlling the first drive wheel to cross an obstacle when it is detected that the cleaning robot (10) is in the obstacle obstruction state;
determining whether the first drive wheel crosses the obstacle; and
controlling the second drive wheel to cross the obstacle when it is detected that the first drive wheel crosses the obstacle.

## Patentansprüche

1. Reinigungsroboter (10), der aufweist:
eine Reinigungskomponente (360);
einen Detektor (330),
eine Rechenkomponente (340);
einen Antrieb (350), der ein erstes Antriebsrad und ein zweites Antriebsrad aufweist, die parallel zueinander angeordnet sind, wobei ein linkes Rad des Reinigungsroboters (10) als erstes Antriebsrad bestimmt wird und ein rechtes Rad des Reinigungsroboters (10) als zweites Antriebsrad bestimmt wird, oder ein rechtes Rad des Reinigungsroboters (10) als erstes Antriebsrad bestimmt wird und ein linkes Rad des Reinigungsroboters (10) als zweites Antriebsrad bestimmt wird;
wobei, wenn der Antrieb (350) den Reinigungsroboter in Bewegung setzt, der Detektor (330) so ausgebildet ist, dass er detektiert, ob sich der Reinigungsroboter (10) in einem Hindernisblockierzustand befindet; und
eine Steuerung (310), die so ausgebildet ist, dass sie das erste Antriebsrad so steuert, dass es ein Hindernis überwindet, und das zweite Antriebsrad so steuert, dass es das Hindernis überwindet, und zwar entsprechend einem Detektionsergebnis, das vom Detektor (330) und der Rechenkomponente (340) ermittelt wird, wenn der Detektor (330) detektiert, dass sich der Reinigungsroboter (10) im Hindernisblockierzustand befindet,
**dadurch gekennzeichnet, dass**
der Detektor (330) ferner so ausgebildet ist, dass er detektiert, ob das erste Antriebsrad das Hindernis überwindet; und
die Steuerung (310) ferner so ausgebildet ist, dass sie das zweite Antriebsrad so steuert, dass es das Hindernis überwindet, wenn der Detektor (330) detektiert, dass das erste Antriebsrad das Hindernis überwindet.

2. Reinigungsroboter (10) nach Anspruch 1, wobei:
die Steuerung (310) ferner so ausgelegt ist, dass sie das erste Antriebsrad so steuert, dass es das Hindernis überwindet, wenn das Detektionsergebnis angibt, dass sich der Reinigungsroboter (10) im Hindernisblockierzustand befindet und ein Neigungswinkel des Reinigungsroboters (10) kleiner als ein erster Winkel ist.

3. Reinigungsroboter (10) nach Anspruch 1 oder 2, wobei, wenn die Steuerung (310) das erste Antriebsrad so steuert, dass es das Hindernis überwindet, die Steuerung (310) ferner für Folgendes ausgebildet ist:
Steuern des ersten Antriebsrads so, dass es sich in eine erste Fahrtrichtung bewegt, und Steuern des zweiten Antriebsrads so, dass es sich in eine zweite Fahrtrichtung bewegt; oder
Steuern des ersten Antriebsrads so, dass es sich in der ersten Fahrtrichtung mit einer ersten Geschwindigkeit bewegt, und Steuern des zweiten Antriebsrads so, dass es sich in der ersten Fahrtrichtung mit einer zweiten Geschwindigkeit bewegt, wobei die erste Geschwindigkeit größer ist als die zweite Geschwindigkeit; oder
Steuern des ersten Antriebsrads so, dass es sich in die erste Fahrtrichtung bewegt, und Steuern des zweiten Antriebsrads so, dass es stillsteht;
wobei die erste Fahrtrichtung eine Fahrtrichtung des Reinigungsroboters (10) ist, bevor der Reinigungsroboter (10) in den Hindernisblockierzustand übergeht, und die zweite Fahrtrichtung der ersten Fahrtrichtung entgegengesetzt ist.

4. Reinigungsroboter (10) nach Anspruch 3, wobei:
wenn die Steuerung (310) das zweite Antriebsrad so steuert, dass es stillsteht, die Steuerung (310) ferner so ausgebildet ist, dass sie eine Fahrtrichtung des zweiten Antriebsrads auf die erste Fahrtrichtung einstellt und die Drehzahl des zweiten Antriebsrads auf Null einstellt;
der Detektor (330) ferner so ausgebildet ist, dass er detektiert, ob sich das zweite Antriebsrad in die zweite Fahrtrichtung dreht, nachdem die Steuerung (310) die Drehzahl des zweiten Antriebsrads auf Null eingestellt hat; und
die Steuerung (310) ferner so ausgebildet, dass sie das zweite Antriebsrad so steuert, dass es eine Drehkraft entlang der ersten Fahrtrichtung ausgibt, um stillzustehen, wenn sich das zweite Antriebsrad in die zweite Fahrtrichtung dreht.

5. Reinigungsroboter (10) nach einem der Ansprüche 1 bis 4, wobei, wenn die Steuerung (310) das zweite Antriebsrad so steuert, dass es das Hindernis überwindet, die Steuerung (310) für Folgendes ausgebildet ist:
Steuern des zweiten Antriebsrads so, dass es sich in eine erste Fahrtrichtung bewegt,
und Steuern des ersten Antriebsrads so, dass es sich in eine zweite Fahrtrichtung bewegt; oder
Steuern des zweiten Antriebsrads so, dass es sich in der ersten Fahrtrichtung mit einer ersten Geschwindigkeit bewegt, und Steuern des ersten Antriebsrads so, dass es sich in der ersten Fahrtrichtung mit einer zweiten Geschwindigkeit bewegt, wobei die erste Geschwindigkeit größer ist als die zweite Geschwindigkeit; oder
Steuern des zweiten Antriebsrads so, dass es sich in die erste Fahrtrichtung bewegt, und Steuern des ersten Antriebsrads so, dass es stillsteht;
wobei die erste Fahrtrichtung eine Fahrtrichtung des Reinigungsroboters (10) ist, bevor der Reinigungsroboter (10) in den Hindernisblockierzustand übergeht, und die zweite Fahrtrichtung der ersten Fahrtrichtung entgegengesetzt ist.

6. Reinigungsroboter (10) nach Anspruch 4, wobei:
wenn die Steuerung (310) das erste Antriebsrad so steuert, dass es stillsteht, die Steuerung (310) so ausgebildet ist, dass sie eine Fahrtrichtung des ersten Antriebsrads auf die erste Fahrtrichtung einstellt und die Drehzahl des ersten Antriebsrads auf Null einstellt,
der Detektor (330) so ausgebildet ist, dass er detektiert, ob sich das erste Antriebsrad in die zweite Fahrtrichtung dreht, nachdem die Steuerung (310) die Drehzahl des ersten Antriebsrads auf Null eingestellt hat; und
die Steuerung (310) ferner so ausgebildet, dass sie das erste Antriebsrad so steuert, dass es eine Drehkraft entlang der ersten Fahrtrichtung ausgibt, um stillzustehen, wenn sich das erste Antriebsrad in die zweite Fahrtrichtung dreht.

7. Reinigungsroboter (10) nach Anspruch 2, wobei:
die Steuerung (310) ferner so ausgebildet ist, dass sie den Reinigungsroboter (10) so steuert, dass er sich in eine zweite Fahrtrichtung bewegt, wenn das Detektionsergebnis angibt, dass der Neigungswinkel des Reinigungsroboters (10) größer als der erste Winkel ist; und
die zweite Fahrtrichtung einer ersten Fahrtrichtung entgegengesetzt ist, und die erste Fahrtrichtung die Fahrtrichtung des Reinigungsroboters (10) ist, bevor der Reinigungsroboter (10) in den Hindernisblockierzustand übergeht.

8. Reinigungsroboter (10) nach Anspruch 7, wobei:
die Steuerung (310) ferner so ausgebildet ist, dass sie den Reinigungsroboter (10) so steuert, dass er sich in eine zweite Fahrtrichtung bewegt, wenn das Detektionsergebnis angibt, dass sich der Reinigungsroboter (10) im Hindernisblockierzustand befindet und der Neigungswinkel des Reinigungsroboters (10) kleiner als ein zweiter Winkel ist; und
die zweite Fahrtrichtung einer ersten Fahrtrichtung entgegengesetzt ist, die erste Fahrtrichtung die Fahrtrichtung des Reinigungsroboters (10) ist, bevor der Reinigungsroboter (10) in den Hindernisblockierzustand übergeht, und der zweite Winkel kleiner ist als der erste Winkel.

9. Reinigungsroboter (10) nach einem der Ansprüche 1 bis 8, wobei:
der Detektor (330) ferner so ausgebildet ist, dass er eine Anzahl von Vorkommnissen erfasst, in denen das Hindernis nicht überwunden wird, wenn der Detektor (330) detektiert, dass das erste Antriebsrad das Hindernis nicht überwindet;
die Steuerung (310) ferner so ausgebildet ist, dass sie den Reinigungsroboter (10) so steuert, dass er sich in eine zweite Fahrtrichtung bewegt, wenn die Anzahl der Vorkommnisse größer als ein voreingestellter Wert ist; und
eine erste Fahrtrichtung eine Fahrtrichtung des Reinigungsroboters (10) ist, bevor der Reinigungsroboter (10) in den Hindernisblockierzustand übergeht, und die zweite Fahrtrichtung der ersten Fahrtrichtung entgegengesetzt ist.

10. Reinigungsroboter (10) nach einem der Ansprüche 1 bis 9, wobei in einer Situation, in der sich der Reinigungsroboter (10) im Hindernisblockierzustand befindet, wenn die Steuerung (310) das erste Antriebsrad so steuert, dass es das Hindernis überwindet, und das zweite Antriebsrad so steuert, dass es das Hindernis überwindet, die Steuerung (310) für Folgendes ausgebildet ist:
Steuern des ersten Antriebsrads so, dass es das Hindernis überwindet, und Steuern des zweiten Antriebsrads so, dass es das Hindernis überwindet, wenn sich der Reinigungsroboter (10) im Hindernisblockierzustand befindet und sich ein Blockierhindernis in einer Richtung parallel zur Fahrtrichtung des Reinigungsroboters (10) und senkrecht zu einer Kontaktfläche befindet, wobei die Kontaktfläche eine Ebene ist, auf der der Reinigungsroboter (10) eine Reinigungsaufgabe ausführt;
wobei das erste Antriebsrad ein Antriebsrad ist, das sich nahe am Blockierhindernis befindet, und das zweite Antriebsrad ein Antriebsrad ist, das vom Blockierhindernis entfernt ist.

11. Reinigungsroboter (10) nach einem der Ansprüche 1 bis 10, wobei:
der Detektor (330) ferner so ausgebildet ist, dass er detektiert, ob sich das erste Antriebsrad und/oder das zweite Antriebsrad in einem Schlupfzustand befindet, wobei der Schlupfzustand ein Zustand ist, in dem sich das erste Antriebsrad und/oder das zweite Antriebsrad auf einer Kontaktfläche gleitend dreht; und bestimmt, dass sich der Reinigungsroboter (10) im Hindernisblockierzustand befindet, wenn sich das erste Antriebsrad und/oder das zweite Antriebsrad im Schlupfzustand befindet, oder
der Detektor (330) ferner so ausgebildet ist, dass er detektiert, ob sich das erste Antriebsrad und/oder das zweite Antriebsrad in einem festgeklemmten Zustand befindet, wobei der festgeklemmte Zustand ein Zustand ist, in dem das erste Antriebsrad und/oder das zweite Antriebsrad während der Drehung durch eine äußere Kraft zum Stillstand gebracht wird; und bestimmt, dass sich der Reinigungsroboter (10) im Hindernisblockierzustand befindet, wenn sich das erste Antriebsrad und/oder das zweite Antriebsrad im festgeklemmten Zustand befindet.

12. Reinigungsroboter (10) nach einem der Ansprüche 1 bis 10, wobei der Detektor (330) ferner für Folgendes ausgebildet ist:
Erfassen einer zurückgelegten Strecke des ersten Antriebsrads und/oder des zweiten Antriebsrads sowie einer Position des Reinigungsroboters (10); und
Bestimmen, dass sich der Reinigungsroboter (10) im Hindernisblockierzustand befindet, wenn ein Abweichungswert der zurückgelegten Strecke einen voreingestellten Bereich überschreitet und sich die Position des Reinigungsroboters (10) nicht ändert.

13. Reinigungsroboter (10) nach einem der Ansprüche 1 bis 10, wobei der Detektor (330) ferner für Folgendes ausgebildet ist:
Detektieren, ob ein Antriebsstrom des Antriebs (350) größer ist als ein voreingestellter Stromwert; und
Bestimmen, dass sich der Reinigungsroboter (10) im Hindernisblockierzustand befindet, wenn der Antriebsstrom größer ist als der voreingestellte Stromwert.

14. Reinigungsroboter (10) nach einem der Ansprüche 1 bis 10, wobei:
der Detektor (330) ferner so ausgebildet ist, dass er detektiert, ob der Reinigungsroboter (10) geneigt ist; und
die Bestimmungsschaltung ferner so ausgebildet ist, dass sie bestimmt, dass sich der Reinigungsroboter (10) im Hindernisblockierzustand befindet, wenn der Reinigungsroboter (10) geneigt ist.

15. Verfahren zum Überwinden eines Hindernisses für einen Reinigungsroboter (10), der ein erstes Antriebsrad und ein zweites Antriebsrad aufweist, die parallel zueinander angeordnet sind, wobei ein linkes Rad des Reinigungsroboters (10) als erstes Antriebsrad bestimmt wird und ein rechtes Rad des Reinigungsroboters (10) als zweites Antriebsrad bestimmt wird, oder ein rechtes Rad des Reinigungsroboters (10) als erstes Antriebsrad bestimmt wird und ein linkes Rad des Reinigungsroboters (10) als zweites Antriebsrad bestimmt wird, wobei das Verfahren **dadurch gekennzeichnet ist, dass** es umfasst:
Bestimmen, ob sich der Reinigungsroboter (10) in einem Hindernisblockierzustand befindet;
Steuern des ersten Antriebsrads so, dass es ein Hindernis überwindet, wenn detektiert wird, dass sich der Reinigungsroboter (10) im Hindernisblockierzustand befindet;
Bestimmen, ob das erste Antriebsrad das Hindernis überwindet; und
Steuern des zweiten Antriebsrads so, dass es das Hindernis überwindet, wenn detektiert wird, dass das erste Antriebsrad das Hindernis überwindet.

## Revendications

1. Robot de nettoyage (10), comprenant :
un composant de nettoyage (360) ;
un détecteur (330) ;
un composant de calcul (340) ;
un dispositif moteur (350) comprenant une première roue d'entraînement et une seconde roue d'entraînement disposées en parallèle, dans lequel une roue gauche du robot de nettoyage (10) est déterminée comme étant la première roue d'entraînement et une roue droite du robot de nettoyage (10) est déterminée comme étant la seconde roue d'entraînement, ou une roue droite du robot de nettoyage (10) est déterminée comme étant la première roue d'entraînement et une roue gauche du robot de nettoyage (10) est déterminée comme étant la seconde roue d'entraînement ;
dans lequel, lorsque le dispositif moteur (350) entraîne le robot de nettoyage pour qu'il se déplace, le détecteur (330) est configuré pour détecter si le robot de nettoyage (10) est dans un état d'entrave due à un obstacle ; et
un organe de commande (310) configuré pour commander la première roue d'entraînement pour qu'elle franchisse un obstacle et pour commander la seconde roue d'entraînement pour qu'elle franchisse l'obstacle conformément à un résultat de détection acquis par le détecteur (330) et par le composant de calcul (340) lorsque le détecteur (330) détecte que le robot de nettoyage (10) est dans l'état d'entrave due à un obstacle,
**caractérisé en ce que** le détecteur (330) est en outre configuré pour détecter si la première roue d'entraînement franchit l'obstacle ; et
l'organe de commande (310) est en outre configuré pour commander la seconde roue d'entraînement pour qu'elle franchisse l'obstacle lorsque le détecteur (330) détecte que la première roue d'entraînement franchit l'obstacle.

2. Robot de nettoyage (10) selon la revendication 1, dans lequel :
l'organe de commande (310) est en outre configuré pour commander la première roue d'entraînement pour qu'elle franchisse l'obstacle lorsque le résultat de détection indique que le robot de nettoyage (10) est dans l'état d'entrave due à un obstacle et qu'un angle d'inclinaison du robot de nettoyage (10) est inférieur à un premier angle.

3. Robot de nettoyage (10) selon la revendication 1 ou la revendication 2, dans lequel, lorsque l'organe de commande (310) commande la première roue d'entraînement pour qu'elle franchisse l'obstacle, l'organe de commande (310) est en outre configuré pour :
commander la première roue d'entraînement pour qu'elle se déplace dans un premier sens de déplacement, et commander la seconde roue d'entraînement pour qu'elle se déplace dans un second sens de déplacement ; ou
commander la première roue d'entraînement pour qu'elle se déplace dans le premier sens de déplacement à une première vitesse, et commander la seconde roue d'entraînement pour qu'elle se déplace dans le premier sens de déplacement à une seconde vitesse, la première vitesse étant supérieure à la seconde vitesse ; ou
commander la première roue d'entraînement pour qu'elle se déplace dans le premier sens de déplacement, et commander la seconde roue d'entraînement pour qu'elle demeure immobile ;
dans lequel le premier sens de déplacement est un sens de déplacement du robot de nettoyage (10) avant que le robot de nettoyage (10) n'entre dans l'état d'entrave due à un obstacle, et le second sens de déplacement est contraire au premier sens de déplacement.

4. Robot de nettoyage (10) selon la revendication 3, dans lequel :
lorsque l'organe de commande (310) commande la seconde roue d'entraînement pour qu'elle demeure immobile, l'organe de commande (310) est en outre configuré pour commander un sens d'entraînement de la seconde roue d'entraînement pour qu'il soit le premier sens de déplacement et une vitesse de rotation de la seconde roue d'entraînement pour qu'elle nulle ;
le détecteur (330) est en outre configuré pour détecter si la seconde roue d'entraînement tourne dans le second sens de déplacement après la commande, par l'organe de commande (310), de la vitesse de rotation de la seconde roue d'entraînement pour qu'elle soit nulle ; et
l'organe de commande (310) est en outre configuré pour commander la seconde roue d'entraînement pour qu'elle délivre une force de rotation dans le premier sens de déplacement de façon à demeurer immobile lorsque la seconde roue d'entraînement tourne dans le second sens de déplacement.

5. Robot de nettoyage (10) selon l'une quelconque des revendications 1 à 4, dans lequel, lorsque l'organe de commande (310) commande la seconde roue d'entraînement pour qu'elle franchisse l'obstacle, l'organe de commande (310) est configuré pour :
commander la seconde roue d'entraînement pour qu'elle se déplace dans un premier sens de déplacement, et commander la première roue d'entraînement pour qu'elle se déplace dans un second sens de déplacement ; ou
commander la seconde roue d'entraînement pour qu'elle se déplace dans le premier sens de déplacement à une première vitesse, et commander la première roue d'entraînement pour qu'elle se déplace dans le premier sens de déplacement à une seconde vitesse, la première vitesse étant supérieure à la seconde vitesse ; ou
commander la seconde roue d'entraînement pour qu'elle se déplace dans le premier sens de déplacement, et commander la première roue d'entraînement pour qu'elle demeure immobile ;
dans lequel le premier sens de déplacement est un sens de déplacement du robot de nettoyage (10) avant que le robot de nettoyage (10) n'entre dans l'état d'entrave due à un obstacle, et le second sens de déplacement est contraire au premier sens de déplacement.

6. Robot de nettoyage (10) selon la revendication 4, dans lequel :
lorsque l'organe de commande (310) commande la première roue d'entraînement pour qu'elle demeure immobile, l'organe de commande (310) est configuré pour commander un sens d'entraînement de la première roue d'entraînement pour qu'il soit le premier sens d'entraînement et une vitesse de rotation de la première roue d'entraînement pour qu'elle soit nulle,
le détecteur (330) est configuré pour détecter si la première roue d'entraînement tourne dans le second sens de déplacement après la commande, par l'organe de commande (310), de la vitesse de rotation de la première roue d'entraînement pour qu'elle soit nulle ; et
l'organe de commande (310) est en outre configuré pour commander la première roue d'entraînement pour délivrer une force de rotation dans le premier sens de déplacement pour qu'elle demeure immobile lorsque la première roue d'entraînement tourne dans le second sens de déplacement.

7. Robot de nettoyage (10) selon la revendication 2, dans lequel :
l'organe de commande (310) est en outre configuré pour commander le robot de nettoyage (10) pour qu'il se déplace dans un second sens de déplacement lorsque le résultat de détection indique que l'angle d'inclinaison du robot de nettoyage (10) est supérieur au premier angle ; et
le second sens de déplacement est contraire à un premier sens de déplacement, et le premier sens de déplacement est le sens de déplacement du robot de nettoyage (10) avant que le robot de nettoyage (10) n'entre dans l'état d'entrave due à un obstacle.

8. Robot de nettoyage (10) selon la revendication 7, dans lequel :
l'organe de commande (310) est en outre configuré pour commander le robot de nettoyage (10) pour qu'il se déplace dans un second sens de déplacement lorsque le résultat de détection indique que le robot de nettoyage (10) est dans l'état d'entrave due à un obstacle et que l'angle d'inclinaison du robot de nettoyage (10) est inférieur à un second angle ; et
le second sens de déplacement est contraire à un premier sens de déplacement, le premier sens de déplacement est le sens de déplacement du robot de nettoyage (10) avant que le robot de nettoyage (10) n'entre dans l'état d'entrave due à un obstacle, et le second angle est inférieur au premier angle.

9. Robot de nettoyage (10) selon l'une quelconque des revendications 1 à 8, dans lequel :
le détecteur (330) est en outre configuré pour enregistrer un nombre d'occurrences de non-franchissement de l'obstacle lorsque le détecteur (330) détecte que la première roue d'entraînement ne franchit pas l'obstacle ;
l'organe de commande (310) est en outre configuré pour commander le robot de nettoyage (10) pour qu'il se déplace dans un second sens de déplacement lorsque le nombre d'occurrences est supérieur à une valeur prédéfinie ; et
un premier sens de déplacement est un sens de déplacement du robot de nettoyage (10) avant que le robot de nettoyage (10) n'entre dans l'état d'entrave due à un obstacle, et le second sens de déplacement est contraire au premier sens de déplacement.

10. Robot de nettoyage (10) selon l'une quelconque des revendications 1 à 9, dans lequel, dans une situation dans laquelle le robot de nettoyage (10) est dans l'état d'entrave due à un obstacle, lorsque l'organe de commande (310) commande la première roue d'entraînement pour qu'elle franchisse l'obstacle et commande la seconde roue d'entraînement pour qu'elle franchisse l'obstacle, l'organe de commande (310) est configuré pour :
commander la première roue d'entraînement pour qu'elle franchisse l'obstacle, et commander la seconde roue d'entraînement pour qu'elle franchisse l'obstacle lorsque le robot de nettoyage (10) est dans l'état d'entrave due à un obstacle et en la présence d'un obstacle d'entrave dans une direction parallèle à un sens de déplacement du robot de nettoyage (10) et perpendiculaire à une surface de contact, la surface de contact étant un plan au niveau duquel le robot de nettoyage (10) effectue une tâche de nettoyage ;
dans lequel la première roue d'entraînement est une roue d'entraînement proximale à l'obstacle d'entrave, et la seconde roue d'entraînement est une roue d'entraînement distale à l'obstacle d'entrave.

11. Robot de nettoyage (10) selon l'une quelconque des revendications 1 à 10, dans lequel :
le détecteur (330) est en outre configuré pour détecter si au moins l'une de la première roue d'entraînement ou de la seconde roue d'entraînement est dans un état de patinage, l'état de patinage étant un état dans lequel au moins l'une de la première roue d'entraînement ou de la seconde roue d'entraînement tourne sur une surface de contact d'une manière glissante ; et pour déterminer que le robot de nettoyage (10) est dans l'état d'entrave due à un obstacle lorsque l'au moins une de la première roue d'entraînement et de la seconde roue d'entraînement est dans l'état de patinage, ou
le détecteur (330) est en outre configuré pour détecter si au moins l'une de la première roue d'entraînement et de la seconde roue d'entraînement est dans un état bloqué, l'état bloqué étant un état dans lequel au moins l'une de la première roue d'entraînement et de la seconde roue d'entraînement est arrêtée par une force externe pendant une rotation ; et pour déterminer que le robot de nettoyage (10) est dans l'état d'entrave due à un obstacle lorsque l'au moins une de la première roue d'entraînement et de la seconde roue d'entraînement est dans l'état bloqué.

12. Robot de nettoyage (10) selon l'une quelconque des revendications 1 à 10, dans lequel le détecteur (330) est en outre configuré pour :
acquérir une distance de déplacement d'au moins l'une de la première roue d'entraînement ou de la seconde roue d'entraînement, et une position du robot de nettoyage (10) ; et
déterminer que le robot de nettoyage (10) est dans l'état d'entrave due à un obstacle lorsqu'une valeur de variation de la distance de déplacement est au-delà d'une plage prédéfinie et que la position du robot de nettoyage (10) ne change pas.

13. Robot de nettoyage (10) selon l'une quelconque des revendications 1 à 10, dans lequel le détecteur (330) est en outre configuré pour :
détecter si un courant de pilotage du dispositif moteur (350) est supérieur à une valeur de courant prédéfinie ; et
déterminer que le robot de nettoyage (10) est dans l'état d'entrave due à un obstacle lorsque le courant de pilotage est supérieur à la valeur de courant prédéfinie.

14. Robot de nettoyage (10) selon l'une quelconque des revendications 1 à 10, dans lequel :
le détecteur (330) est en outre configuré pour détecter si le robot de nettoyage (10) est incliné ; et
le circuit de détermination est en outre configuré pour déterminer que le robot de nettoyage (10) est dans l'état d'entrave due à un obstacle lorsque le robot de nettoyage (10) est incliné.

15. Procédé de franchissement d'un obstacle, destiné à un robot de nettoyage (10) comprenant une première roue d'entraînement et une seconde roue d'entraînement disposées en parallèle, dans lequel une roue gauche du robot de nettoyage (10) est déterminée comme étant la première roue d'entraînement et une roue droite du robot de nettoyage (10) est déterminée comme étant la seconde roue d'entraînement, ou une roue droite du robot de nettoyage (10) est déterminée comme étant la première roue d'entraînement et une roue gauche du robot de nettoyage (10) est déterminée comme étant la seconde roue d'entraînement, le procédé étant **caractérisé en ce qu'**il comprend les étapes consistant à :
déterminer si le robot de nettoyage (10) est dans un état d'entrave due à un obstacle ;
commander la première roue d'entraînement pour qu'elle franchisse un obstacle lorsqu'il est détecté que le robot de nettoyage (10) est dans l'état d'entrave due à un obstacle ;
déterminer si la première roue d'entraînement franchit l'obstacle ; et
commander la seconde roue d'entraînement pour qu'elle franchisse l'obstacle lorsqu'il est détecté que la première roue d'entraînement franchit l'obstacle.
